# FASCICULE DE BREVET EUROPEEN

(11) **EP 2 984 696 B1**
(45) Date de publication et mention de la délivrance du brevet: **17.05.2017**
(21) Numéro de dépôt: 14715934.7
(22) Date de dépôt: 09.04.2014
(51) Int. Cl.: H01M 10/04, H01G 13/02

(54) **SYSTEME ET PROCEDE DE FABRICATION D'UN RUBAN DE COMPLEXE DE STOCKAGE D'ENERGIE ELECTRIQUE**
SYSTEM UND VERFAHREN ZUR HERSTELLUNG EINER ZUSAMMENHÄNGENDEN REIHE ELEKTRISCHER ENERGIESPEICHERKOMPLEXE
SYSTEM AND METHOD FOR PRODUCING A STRIP OF ELECTRICAL ENERGY STORAGE COMPLEX

(30) Priorité: 09.04.2013 FR 1353168
(43) Date de publication de la demande: 17.02.2016
(73) Titulaire: Blue Solutions, 29500 Ergué Gabéric (FR)
(72) Inventeur: LE GAL, Guy, F-29000 Quimper (FR)
(74) Mandataire: Regimbeau
(86) Numéro de dépôt international: PCT/EP2014/057105
(87) Numéro de publication internationale: WO 2014/166974

(56) Documents cités:
- DE-A1-102010 041 622
- JP-A- H1 050 302
- US-A1- 2011 131 799

## Description

### DOMAINE TECHNIQUE

La présente invention concerne le domaine technique général de la fabrication d'un ensemble de stockage d'énergie électrique. Plus précisément, la présente invention concerne la fabrication d'un ruban de complexe de stockage d'énergie électrique pour la production d'un ensemble de stockage d'énergie électrique.

On entend, dans le cadre de la présente invention, par « *ensemble de stockage d'énergie électrique »,* soit un condensateur (i.e. un système passif comprenant deux électrodes et un isolant), soit un supercondensateur (i.e. un système comprenant au moins deux électrodes, un électrolyte et au moins un séparateur), soit une batterie de type batterie au lithium (i.e. un système comprenant au moins une anode, au moins une cathode et une solution d'électrolyte entre l'anode et la cathode).

### PRESENTATION GENERALE DE L'ART ANTERIEUR

On connaît des systèmes et des procédés pour fabriquer un ruban de complexe de stockage d'énergie électrique (voir par exemple US2011/131799). Un tel ruban est ensuite utilisé pour réaliser un ensemble de stockage d'énergie, comme par exemple une batterie lithium.

Ces systèmes et procédés permettent de fabriquer un ruban de complexe par assemblage :
- d'une bobine de film dite « *collecteur*/*cathode »* contenant une couche de collecteur entre deux couches de cathode, et
- de deux bobines de film dite « *électrolyte »* contenant chacune une couche d'électrolyte.

Pour accélérer la cadence de fabrication des bobines de film collecteur/cathode et des bobines de film électrolyte, la largeur de chacun de ces films est généralement environ « n » fois supérieure - n étant un entier non nul - à la largeur du ruban de complexe de stockage d'énergie électrique que l'on souhaite obtenir.

Il est donc nécessaire de découper longitudinalement la bobine de film collecteur/cathode et les bobines de film d'électrolyte à la même largeur que celle souhaitée du ruban de complexe de stockage tel qu'il est utilisé pour fabriquer un ensemble de stockage. Cette découpe des différents films est réalisée préalablement à leur assemblage.

Cette étape de découpe présente l'inconvénient de nécessiter du personnel et de nombreuses manipulations des bobines, ce qui est coûteux en temps et en ressources et diminue le rendement.

Un but de la présente invention est de proposer un système et un procédé de fabrication d'un ruban de complexe de stockage d'énergie électrique pour la production d'ensembles de stockage d'énergie électrique permettant de remédier aux inconvénients précités.

### PRESENTATION DE L'INVENTION

A cet effet, l'invention propose un procédé de fabrication d'un ruban pour la production d'ensembles de stockage d'énergie électrique, le procédé comprenant les étapes consistant à :
- faire défiler une bande de matériau en continu,
- découper longitudinalement la bande de matériau de sorte à former au moins deux brins de matériau à partir de la bande de matériau,
- écarter transversalement les brins de matériau selon une direction d'écartement s'étendant dans un plan de défilement des brins de matériau,
- former au moins une couche fonctionnelle sur les brins de matériau écartés pour obtenir un complexe, et
- découper longitudinalement le complexe pour obtenir au moins deux rubans de complexe de stockage d'énergie électrique.

En particulier, la bande de matériau est une cathode et la couche fonctionnelle comprend au moins une couche d'électrolyte.

Ainsi, l'invention permet par exemple d'obtenir un ruban de complexe de largeur simple à partir de bobines de films de largeurs doubles.

L'étape d'écartement permet d'obtenir des largeurs différentes pour chacune des couches. La couche d'électrolyte peut ainsi être de largeur supérieure à la couche de cathode et déborder de ladite couche de cathode, ce qui est préférable pour garantir une isolation électrique optimale entre la cathode et l'anode (ajoutée ensuite à l'empilement) en évitant tout contact entre ces deux électrodes.

Ce ruban de complexe peut être utilisé pour la production d'ensembles de stockage d'énergie électrique comportant un tel ruban.

Des aspects préférés mais non limitatifs du procédé selon l'invention sont les suivants :
- le procédé comprend en outre une étape consistant à faire défiler les brins de matériau écartés dans un même plan de défilement et selon des directions de défilement parallèles suite à l'étape d'écartement;
   ceci permet de maintenir constante la distance d séparant deux brins de matériau adjacents écartés ;
- l'étape consistant à former au moins une couche fonctionnelle consiste à :
   ∘ faire défiler en continu au moins un film fonctionnel, et
   ∘ déposer ledit ou au moins un film fonctionnel sur les brins de matériau écartés,
   la largeur dudit film fonctionnel étant de préférence supérieure ou égale à la somme des largeurs des brins de matériau et de la distance d entre brins de matériau adjacents écartés, afin de couvrir entièrement les deux brins de matériau ;
   ceci permet d'augmenter la cadence d'obtention d'un complexe composé d'une superposition de couches, notamment en déposant simultanément le film d'électrolyte sur deux brins de matériau écartés ;
- l'étape consistant à déposer au moins un film fonctionnel comprend les sous étapes de :
   ∘ mise en contact des brins de matériau écartés avec ledit ou au moins l'un des films fonctionnels, et
   ∘ complexage des brins de matériau avec ledit ou au moins l'un des films fonctionnels pour obtenir le complexe.
   on entend, dans le cadre de la présente invention par « *complexage »,* une étape de collage par mise sous pression d'un empilement constitué des brins de matériau et dudit et au moins un film d'électrolyte ;
   cette mise sous pression est par exemple obtenue en pressant les brins de matériau contre le film d'électrolyte grâce à des cylindres entre lesquels défile l'empilement ;
- le procédé comprend en outre une étape consistant à chauffer ledit ou au moins l'un des films fonctionnels et/ou les brins de matériau préalablement à l'étape consistant à superposer ledit ou au moins l'un des films fonctionnels aux brins de matériau écartés ;
   ceci permet d'améliorer la qualité du complexage des brins de matériau avec ledit et au moins un film fonctionnel, notamment d'électrolyte ;
- le procédé peut également comprendre en outre une étape consistant à refroidir l'empilement postérieurement à l'étape consistant à superposer ledit ou au moins l'un des films fonctionnels sur les brins de matériau écartés ;
- le procédé comprend en outre une étape de préparation dudit ou l'au moins un des films fonctionnels préalablement à l'étape de superposition, ladite étape de préparation du film fonctionnel comprenant les sous-étapes de :
   ∘ retrait d'un film de protection s'étendant sur une face dudit film fonctionnel destinée à venir en contact avec les brins de matériau, et de
   ∘ redirection et récupération dudit film de protection ;
   l'utilisation d'un film de protection permet d'éviter les risques de dégradation du film fonctionnel, notamment d'électrolyte, ce film de protection servant également de support au film fonctionnel préalablement à son assemblage sur les brins de matériau ; la sous étape de récupération du film de protection permet une réutilisation de celui-ci ;
- avantageusement :
   ∘ la sous-étape de retrait du film de protection comprend le décollement du film de protection, et
   ∘ la sous-étape de récupération du film de protection comprend l'enroulage du film de protection sur un poste d'enroulage ;
- l'étape consistant à déposer au moins un film fonctionnel sur les brins de matériau écartés comprend :
   ∘ la superposition d'un premier film d'électrolyte sur les faces supérieures des brins de matériau écartés, et
   ∘ la superposition d'un deuxième film d'électrolyte sur les faces inférieures des brins de matériau écartés,
   les sous-étapes de superposition des premier et deuxième films fonctionnels étant de préférence mises en oeuvre simultanément.
   Ceci permet l'obtention d'un complexe composé de brins de matériau écartés et s'étendant entre deux film d'électrolyte ;
- le procédé comprend en outre une étape consistant à déposer une pellicule de séparation sur une face du complexe postérieurement à l'étape de superposition;
   l'utilisation d'une pellicule de séparation permet d'éviter les risques de dégradation du ruban fabriqué, notamment dans le cas où ce ruban fabriqué est enroulé pour faciliter son stockage ;
- le procédé comprend en outre une étape de conditionnement du complexe comprenant les sous étapes de :
   ∘ retrait d'un film de protection s'étendant sur une face du complexe, et de
   ∘ redirection et récupération dudit film de protection,
   ladite étape de conditionnement étant mise en oeuvre préalablement à l'étape consistant à déposer la pellicule de séparation ;
   le coût de la pellicule de séparation peut être très inférieur à celui du film de protection car il n'est pas nécessaire qu'elle remplisse des fonctions de support contrairement à un film de protection retiré qui peut avoir une fonction de support lorsque le film fonctionnel est un film d'électrolyte : il est donc préférable de remplacer celui-ci par la pellicule de séparation ;
- l'étape consistant à découper longitudinalement le complexe consiste à découper le complexe dans une zone située entre les deux brins de matériau écartés ;
- le procédé comprend en outre une étape de mesure des tensions des brins de matériau écartés;
   ceci permet de contrôler les forces de traction exercées sur les brins de matériau afin d'induire leur défilement ;
- le procédé comprend en outre une étape consistant à faire varier la vitesse d'entraînement induite par un élément d'entrainement sur chaque brin de matériau en fonction des forces de traction mesurées de sorte à maintenir égale entre elles lesdites forces de traction ;
   ceci permet de faire varier les forces de traction exercées sur les brins de matériau afin de maintenir ces forces de traction égales entre elles ;
- les étapes consistant à découper longitudinalement la bande de matière et à écarter transversalement les brins de la bande de matière sont mises en oeuvre dans des plans de défilement différents ;
   ceci permet de limiter les risques de propagation longitudinale des contraintes engendrées par l'écartement des brins de matériau, contraintes pouvant induire un déchirement de la bande si celles-ci se propagent jusqu'à la zone de découpe de la bande.

L'invention concerne également un système de fabrication d'un ruban de complexe de stockage d'énergie électrique pour la production d'ensembles de stockage d'énergie électrique à partir dudit ruban, remarquable en ce qu'il comprend des moyens pour mettre en oeuvre le procédé décrit ci-dessus.

Ces moyens sont les suivants :
- des moyens pour faire défiler une bande de matériau en continu,
- des moyens de découpe pour découper longitudinalement la bande de matériau de sorte à former au moins deux brins de matériau à partir de la bande de matériau,
- des moyens de séparation pour écarter transversalement les brins de matériau selon une direction d'écartement s'étendant dans un plan de défilement des brins de matériau,
- des moyens de formation d'au moins une couche fonctionnelle sur les deux brins de matériau écartés, afin d'obtenir un complexe,
- des moyens de découpe pour découper longitudinalement le complexe pour obtenir au moins deux rubans de complexe de stockage d'énergie électrique.

On entend, dans le cadre de la présente invention, par « *complexe »,* un empilement comportant au moins une couche de cathode et une couche d'électrolyte.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- les figures 1 et 2 illustrent des modes de réalisation d'un procédé de fabrication d'un ruban de complexe de stockage d'énergie,
- la figure 3 illustre un dispositif de complexage,
- les figures 4 et 8 illustrent des modes de réalisation d'un système de fabrication d'un ruban de complexe de stockage d'énergie,
- les figures 5 et 6 illustrent un dispositif de séparation,
- la figure 7 illustre des cylindres de compression d'un dispositif de complexage.

### DESCRIPTION DE L'INVENTION

On va maintenant décrire différents modes de réalisation de l'invention en référence aux figures. Dans ces différentes figures, les éléments équivalents portent les mêmes références numériques.

### 1. Procédé de fabrication

### 1.1. Principe général

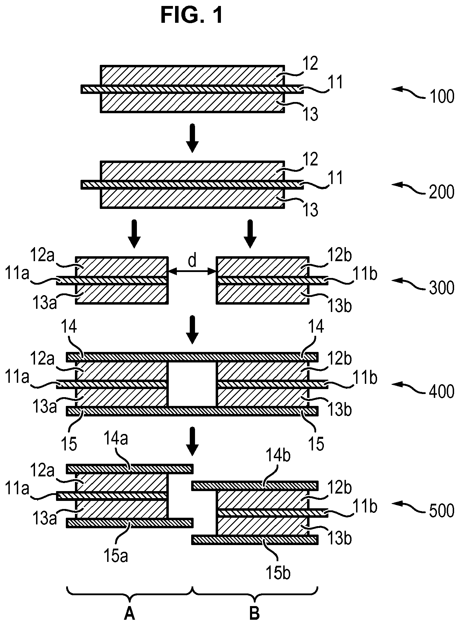

En référence à la figure 1, on a illustré les étapes principales d'un procédé de fabrication d'un ruban de complexe de stockage d'énergie électrique.

Un ruban de complexe de stockage d'énergie peut être tout ou partie de l'élément qui permettra le stockage d'énergie. Dans les modes de réalisation décrits ci-après, par exemple, on assemble l'électrolyte et la cathode d'une batterie, l'anode étant ajoutée lors d'une étape suivante, à l'aide d'un autre dispositif. On pourrait toutefois fabriquer à l'aide des procédé et dispositif décrits ci-dessus l'élément de stockage d'énergie dans son intégralité.

Une fois obtenu, ce ruban peut être utilisé pour la production d'ensembles de stockage d'énergie électrique contenant une portion de ce ruban - éventuellement enroulée ou pliée, placée dans un logement d'une enveloppe de protection étanche dudit ensemble de stockage.

### 1.1.1. Etape de défilement

Le procédé de fabrication du ruban comprend une étape 100 consistant à faire défiler une bande de matériau 11, 12, 13 en continu. Cette bande de matériau 11, 12, 13 est de préférence stockée sous la forme d'un rouleau. Elle peut par exemple être constituée soit :
- d'un film de cathode 12,
- d'un film de cathode 12 superposé à un film de collecteur 11, ou
- d'un empilement constitué d'un film de collecteur 11 s'étendant entre deux films de cathode 12, 13.

Dans l'exemple illustré à la figure 1, la bande de matériau comporte un empilement constitué :
- d'un premier film de cathode 13,
- d'un film de collecteur 11 sur le premier film de cathode 13 et
- d'un deuxième film de cathode 12 sur le film de collecteur 11.

### 1.1.2. Etape de découpe

Dans une autre étape 200 du procédé, la bande de matériau défilant en continu est découpée longitudinalement. Ceci permet d'obtenir deux brins de matériau (11 a, 12a, 13a et 11 b, 12b, 13b) à partir de la bande de matériau initiale.

La découpe de la bande de matériau est par exemple mise en oeuvre au niveau d'un dispositif de découpe qui sera décrit plus en détail par la suite.

Cette découpe peut être réalisée au milieu de la bande de matériau de sorte à obtenir deux brins de matériau de même largeur. En variante, la découpe peut être décalée par rapport au milieu de la bande de sorte à obtenir deux brins de matériau de largeur différentes.

Bien entendu, la bande de matériau peut être découpée en plusieurs régions sur sa largeur (par exemple trois régions) de sorte à obtenir une pluralité de brins de matériau (par exemple quatre brins de matériau).

### 1.1.3. Etape d'écartement

Le procédé comprend également une étape 300 consistant à écarter les brins de matériau entrainés en parallèle. Plus précisément, les brins de matériau 11a, 12a, 13a et 11 b, 12b, 13b sont écartés l'un de l'autre selon une direction d'écartement s'étendant dans un plan de défilement des brins de matériau.

Suite à l'étape d'écartement, expliquée en détails plus loin, on obtient deux brins de matériau 11a, 12a, 13a et 11 b, 12b, 13b espacés transversalement l'un de l'autre d'une distance d.

De préférence, ces brins de matériau une fois écartés s'étendent dans un même plan.

### 1.1.4. Etape de formation du complexe

Une (ou plusieurs) couche(s) d'électrolyte 14,15 est (sont) formée(s) ou appliquées sur les brins de matériau écartés (étape 400). On obtient ainsi un complexe.

Dans certaines variantes de réalisation, une couche d'électrolyte 14 est formée sur une face unique des brins de matériau écartés.

Dans le mode de réalisation illustré à la figure 1, une couche d'électrolyte respective 14, 15 est formée sur chacune des faces des brins de matériau écartés.

La (ou les) couche(s) d'électrolyte 14, 15 peut (peuvent) être formée(s) par toute technique connue de l'homme du métier.

Par exemple, la couche d'électrolyte peut être formée par dépôt d'au moins un film d'électrolyte sur les deux brins de matériau entraînés en parallèle (i.e. simultanément et de façon synchrone) de sorte que le film d'électrolyte recouvre toute la surface de chacun des brins de matériau.

Dans ce cas, la largeur du film d'électrolyte recouvre partiellement les extrémités opposées des deux brins de matériau écartés sans venir en contact avec le film de collecteur de sorte à éviter les risques de court-circuit mais en laissant une portion de collecteur accessible suffisante pour permettre d'effectuer une connexion électrique de la cathode.

### 1.1.5. Etape de découpe du complexe

Une fois la (ou les) couche(s) d'électrolyte formée(s), le complexe est découpé longitudinalement (étape 500) pour obtenir les deux rubans de complexe de stockage d'énergie électrique qui seront par la suite utilisés pour être placés dans les éléments de stockage d'énergie.

Cette étape de découpe peut être mise en oeuvre en utilisant un dispositif de découpe semblable à celui utilisé pour découper longitudinalement la bande de matériau.

Dans l'exemple illustré à la figure 1, on obtient ainsi deux rubans de complexe de largeurs simples à partir de bobines de films de largeurs doubles.

### 1.2. Exemple de procédé de fabrication

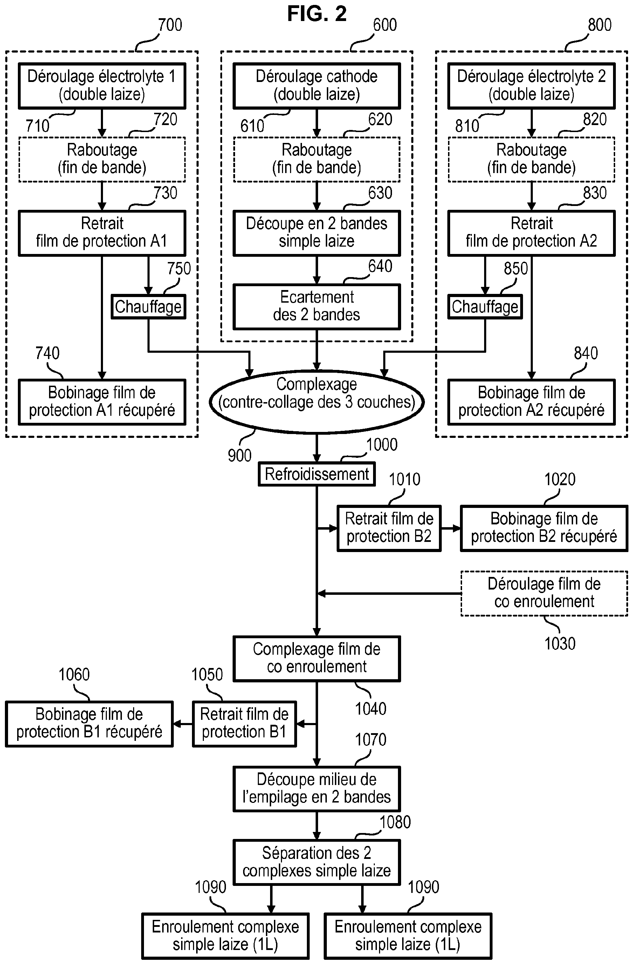

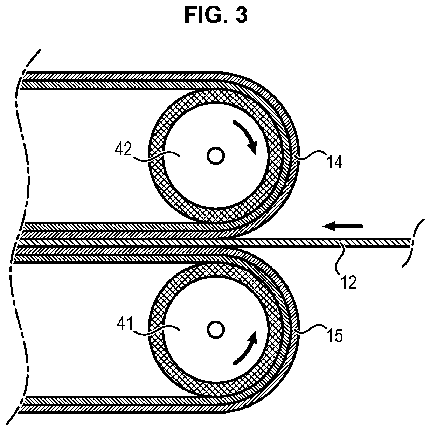

En référence à la figure 2, on a illustré un exemple de procédé de fabrication permettant l'obtention de deux rubans de largeurs simples à partir d'une bande de matériau et de films d'électrolyte de largeurs doubles. Ce procédé peut être mis en oeuvre en utilisant un système de fabrication qui sera décrit en référence aux figures 3 à 8.

Le procédé comprend trois phases 600, 700, 800 de préparation préalablement à l'assemblage de la bande de matériau avec les films d'électrolyte :
- une phase 600 de préparation de la bande de matériau, et
- deux phases 700, 800 de préparation des films d'électrolyte.

Ces trois phases de préparation peuvent être mises en oeuvre en parallèle afin de réduire la durée de fabrication du ruban de complexe de stockage d'énergie électrique.

### 1.2.1. Préparation de la bande de matériau

La phase de préparation 600 de la bande de matériau comprend une étape 610 consistant à faire défiler la bande de matériau en continu. Cette étape de défilement 610 peut par exemple être obtenue en déroulant la bande de matériau à partir d'une bobine mise en rotation.

Avantageusement, la phase de préparation peut comprendre une étape de raboutage 620 optionnelle à l'aide d'un dispositif de raboutage connu de l'homme du métier. Cette étape de raboutage permet de raccorder :
- l'extrémité dite « *de début de bande »* d'une bobine, à
- l'extrémité dite « *de fin de bande »* d'une autre bobine déjà déroulée et utilisée dans le procédé.

Ceci permet de changer les bobines de bandes de matériau sans nécessiter d'interruption prolongée du système de fabrication associé au procédé.

La phase de préparation comprend également une étape de découpe longitudinale 630 de la bande de matériau de sorte à obtenir des brins de matériau, notamment deux brins de matériau de largeur simple à partir d'une bande de largeur double. Cette étape est mise en oeuvre au niveau d'un dispositif de découpe : la bande de matériau défile jusqu'au dispositif de découpe qui la divise en deux brins de matériau.

La phase de préparation comprend également une étape d'écartement 640 des brins de matériau obtenus en sortie du dispositif de découpe. Les brins de matériau défilent jusqu'à un dispositif de séparation. Ce dispositif de séparation espace les brins de matériau selon une direction transversale. Cette direction transversale s'étend dans le plan de défilement des brins de matériau, perpendiculairement à leur direction de défilement. Le dispositif de séparation permettant d'effectuer cette opération sera décrit en détails ci-après.

De préférence, les étapes de découpe 630 de la bande et d'écartement 640 des brins sont réalisées dans des plans de défilement différents, par exemple parallèles. En d'autres termes, le plan de défilement de la bande lors de l'étape de découpe 630 est différent du plan de défilement des brins lors de l'étape d'écartement 640.

Ceci permet d'éviter une propagation longitudinale des contraintes mécaniques engendrées par l'écartement des brins de matériau. En effet, la propagation de ces contraintes dans la zone de découpe de la bande de matériau pourrait dégrader celle-ci, notamment par déchirement.

Les brins de matériau écartés défilent jusqu'à un dispositif de complexage du système pour être assemblés aux films d'électrolyte.

### 1.2.2. Préparation des films d'électrolyte

Les phases de préparation 700, 800 des deux films d'électrolyte comprennent des étapes identiques. Ces étapes ne seront décrites qu'une seule fois en référence à l'un des films d'électrolyte.

Il est bien entendu pour l'homme du métier que le procédé peut comprendre une seule phase de préparation d'un film d'électrolyte dans le cas où un seul film d'électrolyte est déposé sur les brins de matériau écartés.

La phase de préparation 700, 800 du film d'électrolyte comprend les étapes consistant à :
- faire défiler 710 le film d'électrolyte, par exemple en déroulant le film d'électrolyte à partir d'une bobine entrainée en rotation,
- éventuellement, rabouter 720 l'extrémité de début d'une bobine de film d'électrolyte à l'extrémité de fin d'une autre bobine de film d'électrolyte comme expliqué précédemment,
- éventuellement :
   ∘ retirer 730 - par exemple par décollement, notamment à l'aide d'un couteau de dépelliculage comprenant une arête de décollement - un film de protection s'étendant sur une face du film d'électrolyte destinée à venir en contact avec les brins de matériau, et
   ∘ rediriger le film de protection hors de la voie principale de fabrication du complexe et récupérer 740 le film de protection - par exemple par enroulage du film de protection sur un poste d'enroulage,
- éventuellement, chauffer 750 le film d'électrolyte.

Chaque film d'électrolyte ainsi préparé défile ensuite jusqu'au dispositif de complexage du système pour être assemblé aux brins de matériau.

### 1.2.3. Complexage

Une étape de superposition des films d'électrolyte aux brins de matériau écartés est ensuite effectuée dans un dispositif de complexage du système.

Comme illustré à la figure 3, chaque film d'électrolyte 14, 15 est mis en contact avec une face respective des brins de matériau écartés 12. De préférence, la largeur de chaque film d'électrolyte est supérieure à la somme des largeurs des brins de matériau et de la distance d entre ces brins. Ainsi, chaque film d'électrolyte dépasse des bords opposés des brins de matériau écartés, comme montré sur la figure 1 (étape 400).

Une fois mis en contact, les films d'électrolyte 14, 15 et les brins de matériau écartés 12 sont complexés ensemble pour former un complexe.

Le complexage 900 consiste à faire adhérer les films d'électrolyte aux brins de matériau, par exemple en pressant les brins de matériau contre les films d'électrolyte grâce à des cylindres de compression entre lesquels défilent les brins de matériau écartés 12 et les films d'électrolyte 14, 15. Sous l'effet de la pression générée par les cylindres de compression, le(s) film(s) (respectivement le(s) film(s) d'électrolyte) qui comportent des polymères thermo-fusibles déjà fondus localement grâce à l'étape de chauffe, adhèrent aux brins de matière (respectivement au film de cathode) au point de compression entre les cylindres.

On obtient un complexe en sortie du dispositif de complexage. Ce complexe comprend deux brins de matériau écartés intercalés entre deux films d'électrolyte.

### 1.2.4. Autres étapes effectuées suite au complexage.

Lorsque le film d'électrolyte a été chauffé, le procédé peut comprendre une étape de refroidissement 1000 du complexe.

Le complexe peut comprendre des films de protection sur ses faces externes, notamment lorsque les films d'électrolyte comprennent des films de protection sur leurs faces opposées à celles qui ont été collées sur les brins de matériau écartés.

Dans ce cas, le procédé peut éventuellement comprendre une étape de retrait 1010 de l'un des films de protection de l'une des faces du complexe. Le film de protection retiré peut ensuite être ré-enroulé et stocké 1020 pour sa réutilisation ultérieure, après redirection hors de la voie principale du complexe.

Le procédé peut également comprendre les étapes de déroulement 1030 d'une pellicule de séparation et de superposition 1040 de la pellicule de séparation sur la face du complexe ne comprenant plus de film de protection (le film de protection venant d'être retiré de ladite face à l'étape 1010). Cette pellicule de séparation permet d'éviter les risques de collage des spires du complexe entre elles lorsque le complexe est enroulé pour former une bobine.

La pellicule de séparation (qui n'a qu'une fonction de séparation) est moins coûteuse que le film de protection (qui a d'une part une fonction de séparation et d'autre part une fonction de support du film d'électrolyte).

En effet, le film de protection est par exemple en polytéréphtalate d'éthylène (PET) traité anti-adhérence sur l'une de ses faces, alors que la pellicule de séparation est par exemple en papier traité anti-adhérence sur ses deux faces ou en matière plastique moins coûteuse et anti-adhérente par nature, telle que le polyéthylène (PE) ou le polypropylène (PP).

Il peut donc être préférable de remplacer le film de protection par la pellicule de séparation pour limiter les coûts associés à la fabrication du ruban de complexe de stockage d'énergie électrique.

L'étape de superposition 1040 de la pellicule de séparation sur le complexe peut être mise en oeuvre par complexage : le complexe et la pellicule de séparation défilent par exemple entre des cylindres de compression permettant d'aboutir à un coenroulement de la pellicule de séparation sur le complexe. Dans ce cas, on ne chauffe pas le complexe ou la pellicule de séparation pour éviter d'aboutir à un contre-collage qui rendrait plus difficile la séparation ultérieure de la pellicule et du complexe.

Une fois la pellicule de séparation superposée à la face du complexe, le film de protection recouvrant l'autre face du complexe peut être retiré 1050 et récupéré 1060 sur un poste d'embobinage pour sa réutilisation ultérieure, après redirection hors de la voie principale de fabrication du complexe.

Le complexe est ensuite découpé 1070 au milieu de l'empilage (comme montré sur la figure 1 à l'étape 500) pour former deux rubans de complexe de stockage d'énergie électrique.

Ces rubans sont séparés 1080 et embobinés 1090 de sorte à former deux bobines de ruban de complexe de stockage d'énergie électrique.

### 2. Système de fabrication

On va maintenant décrire plus en détail des exemples de systèmes pour la mise en oeuvre du procédé de fabrication de ruban de complexe de stockage d'énergie électrique.

### 2.1. Principe général

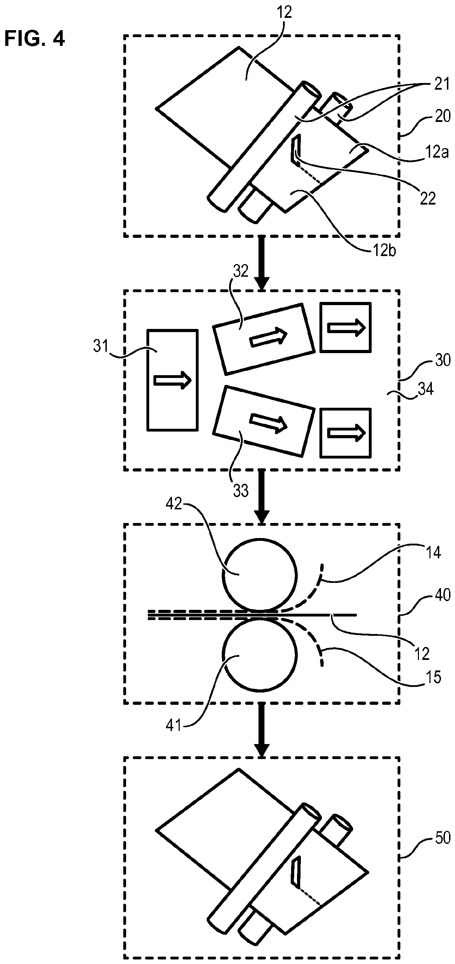

En référence à la figure 4, on a illustré une variante de réalisation d'un système de fabrication de ruban de complexe de stockage d'énergie électrique.

Le système comprend :
- un premier dispositif de découpe 20,
- un dispositif de séparation 30 en aval du premier dispositif de découpe 20,
- un dispositif de complexage 40 en aval du dispositif de séparation 30, et
- un deuxième dispositif de découpe 50 en aval du dispositif de complexage 40.

### 2.1.1. Dispositif de découpe

Le premier dispositif de découpe 20 permet de couper la bande de matériau 12 en deux (ou plus de deux) brins de matériau 12a, 12b.

Ce dispositif de découpe 20 comprend :
- des moyens de guidage 21 pour faire défiler la bande de matériau 12, et
- des moyens de tranchage 22 pour couper longitudinalement la bande de matériau afin de former des brins de matériau.

Les moyens de guidage 21 sont par exemple constitués de deux cylindres entre lesquels la bande de matériau 12 est pressée. On notera que les moyens de guidage ne sont pas a priori destinés à entraîner la bande de matériau. Le défilement de la bande est induite par les cylindres d'entraînement 41, 42, appartenant également au système et situés en aval des cylindres 21, 22, décrits plus loin.

Les moyens de tranchage 22 peuvent comprendre une (ou plusieurs) lames fixes ou rotatives disposée(s) sur le chemin de déplacement de la bande de matériau 12 de sorte à couper longitudinalement la bande de matériau afin d'obtenir deux (ou une pluralité de) brins de matériau 12a, 12b.

Le deuxième dispositif de découpe 50 permet de découper le complexe pour obtenir des rubans de complexe de stockage d'énergie électrique. Les éléments constituant ce deuxième dispositif de découpe peuvent être identiques à ceux du premier dispositif de découpe.

### 2.1.2. Dispositif de séparation

### 2.1.2.1. Généralités sur le dispositif de séparation

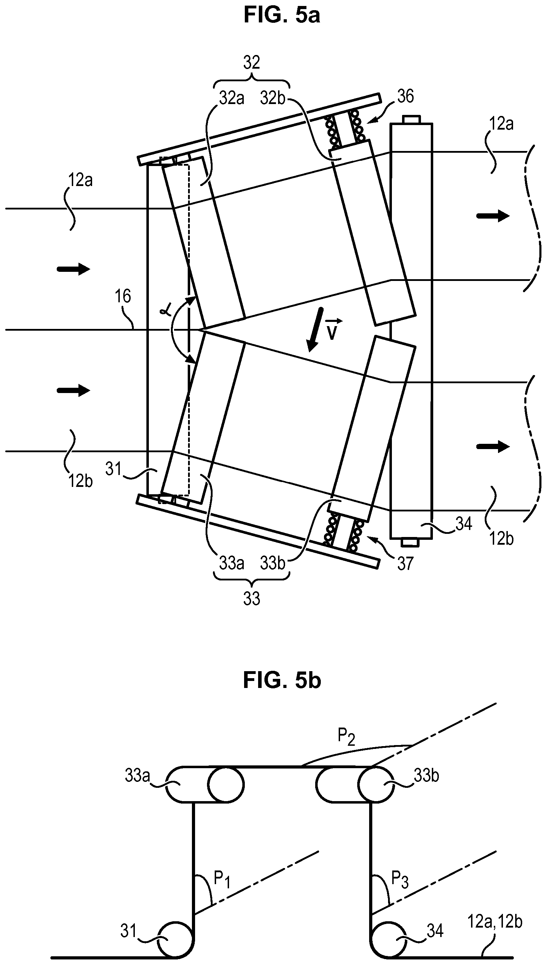

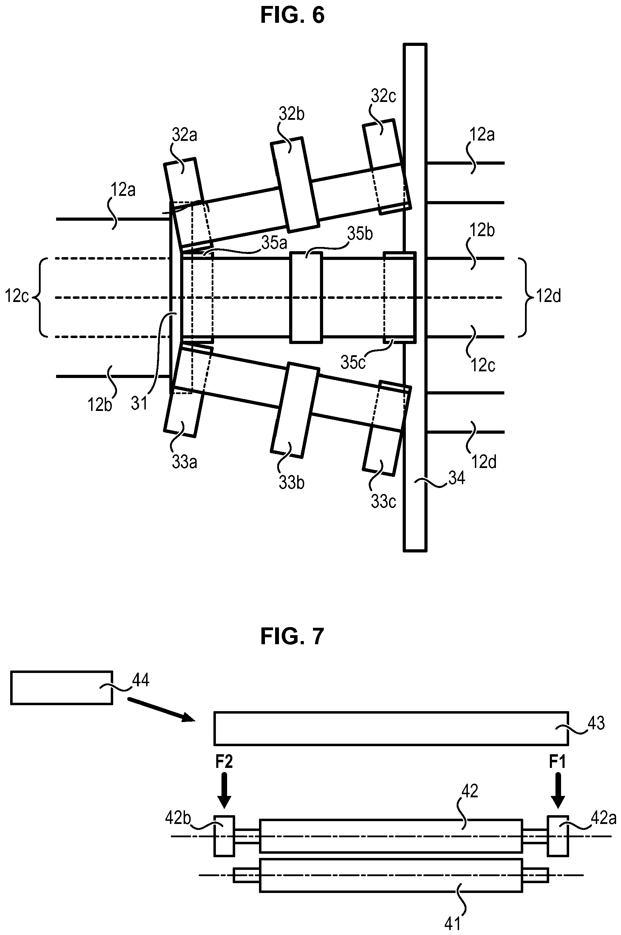

Le dispositif de séparation 30, illustré aux figures 5 et 6, permet d'écarter les brins de matériau 12a, 12b découpés par le premier dispositif de découpe 20.

Le dispositif de séparation tel que décrit à la figure 5 comprend :
- au moins un élément de guidage amont 31 des deux brins de matériau 12a, 12b côte à côte,
- un écarteur comprenant au moins deux bras d'écartement 32, 33 en parallèle, chaque bras d'écartement 32, 33 étant positionné pour guider un des deux brins de matériau 12a, 12b selon une direction de guidage particulière, les directions de guidage des deux bras d'écartement étant divergentes, i.e. présentant un angle non nul entre elles,
- au moins un élément de guidage aval 34 des deux brins de matériau 12a, 12b, pour les guider selon une même direction de guidage, une fois qu'ils ont été écartés.

Dans le mode de réalisation illustré à la figure 4, la direction de guidage induite par chaque bras de d'écartement 32, 33 est différente de la direction de guidage induite par l'élément de guidage amont 31. En variante, un des bras d'écartement peut guider un brin de matériau selon la même direction de guidage que l'élément de guidage amont.

De préférence, comme on le voit sur la figure 5b, le plan de défilement P1 dans lequel se trouve chaque brin de matériau 12a, 12b entre l'élément de guidage amont 31 et son entrée dans l'écarteur d'une part, et le plan de défilement P2 dans lequel se trouve chaque brin de matériau 12a, 12b lors de passage dans l'écarteur d'autre part ne sont pas les mêmes, et plus particulièrement forment un angle non nul, de préférence sont perpendiculaires.

De même, le plan de défilement P2 dans lequel se trouve chaque brin de matériau 12a, 12b lors de son passage au niveau de l'écarteur d'une part et le plan de défilement P3 dans lequel se trouve chaque brin de matériau 12a, 12b entre sa sortie de l'écarteur et l'élément de guidage aval 34 d'autre part ne sont pas les mêmes, et plus particulièrement forment un angle non nul, de préférence sont perpendiculaires.

Ceci permet d'éviter la propagation des contraintes exercées par les bras d'écartement le long de la bande de matériau, propagation de contrainte qui pourrait notamment engendrer une déchirure de la bande de matériau au niveau du dispositif de découpage 20.

De préférence, les brins de matériau 12a, 12b s'étendent dans un même plan de défilement lors de leur passage au niveau de leur bras d'écartement respectif.

Chaque bras d'écartement comprend deux cylindres successifs d'axe parallèle. Ces deux cylindres définissent, pour chaque bras, la direction de guidage du brin de matière correspondant.

De façon préférentielle chaque bras d'écartement 32, 33 comprend un bâti permettant de garantir plus facilement le parallélisme des axes des cylindres, et la stabilité de la direction de guidage.

La position de chaque bras d'écartement peut être réglable de façon à faire varier la direction de guidage de chaque brin de matériau 12a, 12b. Ceci permet d'éviter d'engendrer des contraintes mécaniques indésirables dans les brins de matériau 12a, 12b, notamment lors du démarrage du système. Pour éviter cela, on peut par exemple placer les deux bras d'écartement en alignement parallèle (la valeur de la distance d'écartement induite par ces cylindres étant alors nulle et les axes des cylindres étant alors parallèles) lors du démarrage du système et modifier progressivement la position de chaque bras d'écartement pour arriver à la direction de guidage voulue pour chaque brin de matériau 12a, 12b.

De préférence, les cylindres en vis-à-vis des bras d'écartement sont en contact l'un avec l'autre au niveau de leur extrémité. Cela permet d'éviter que les brins de matériau ne soient abîmés au niveau de leur bord central (correspondant à la zone de coupe de la bande de matériau). Pour ce faire, des moyens élastiques sont interposés entre le bras et le palier adjacent (situé au voisinage d'une extrémité) d'au moins l'un des cylindres pour repousser le cylindre vers le cylindre adjacent relié à l'autre bras.

### 2.1.2.2. Exemples de dispositifs de séparation

On va maintenant décrire plus en détails les modes de réalisation représentés aux figures 5 et 6.

Dans les deux modes de réalisation, les moyens de guidage amont31 permettent de recevoir les brins de matériau découpés par le dispositif de découpage 20. Ces moyens comprennent un cylindre de défilement dont la largeur est supérieure ou égale à la largeur de la bande de matériau.

Dans ces deux modes de réalisation également, les moyens de guidage aval 34 permettent de faire défiler les brins de matériau 12a, 12b espacés par l'écarteur dans un même plan de défilement, et de préférence de manière synchronisée, en rétablissant le parallélisme des brins 12a et 12b.

Ces moyens 34 permettent également de maintenir constante la distance « d » entre les brins de matériau adjacents espacés par l'écarteur.

Ils comprennent un cylindre de défilement. Les dimensions de ce cylindre de défilement sont de préférence adaptées pour recevoir les brins de matériau espacés par l'écarteur. Plus précisément, la longueur du cylindre de défilement est supérieure ou égale à la somme des largeurs des brins de matériau écartés et de la distance d entre ces brins.

On notera que les moyens de guidage aval pourraient également comprendre plusieurs cylindres d'axe de révolution parallèles.

### L'écarteur

L'écarteur permet d'espacer les brins de matériau 12a, 12b ; 12a, 12b + 12c, 12d selon une direction transversale v s'étendant dans le plan de défilement des brins de matériau, essentiellement perpendiculairement à la direction de défilement desdits brins de matériau.

L'écarteur comprend une pièce support en contact avec l'un au moins des brins de matériau, deux brins de matériau destinés à être écartés étant placés sur deux pièces support distinctes.

L'écarteur de la figure 5 comprend plus particulièrement deux pièces support adjacentes, chaque pièce support comprenant des moyens de guidage en écartement pour guider respectivement chaque brin de matériau 12a, 12b.

La pièce support permet de maintenir les brins de matériau 12a, 12b dans un plan de défilement, chaque brin de matériau étant guidé selon sa direction de défilement respective. Les directions de défilement respectives des brins de matériau dans l'écarteur sont différentes de la direction de défilement principale.

En référence à la figure 5a, chaque pièce support comprend un bras formant bâti et portant deux cylindres successifs de guidage en écartement 32a, 32b ; 33a, 33b situés dans le prolongement l'un de l'autre et d'axe parallèle. On notera que l'au moins un des bras de la pièce support, notamment les deux bras, sont mobiles en rotation autour d'un axe normal au plan de défilement des brins dans l'écarteur. Cela permet d'assurer de bonnes propriétés mécaniques film au démarrage de la machine (on écarte en effet progressivement les bras pour dévier le film progressivement).

L'axe de rotation de chacun des bras est perpendiculaire au plan de défilement des brins de matériau et est de préférence concourant avec le milieu de la largeur du brin de matériau au voisinage de son passage sur le premier cylindre associés audit bras, lorsque ce cylindre est dans la position d'alignement parallèle. De cette façon, on évite l'allongement d'une partie du brin du fait des contraintes de torsion et on limite les risques de déchirement du brin.

Chaque cylindre de guidage en écartement tel que 32a monté sur un bras est en vis-à-vis d'un cylindre de guidage tel que 33a monté sur l'autre bras de sorte qu'ils soient adjacents, notamment que leurs extrémités soient en contact. Les axes de rotation de ces cylindres en vis-à-vis sont concourants et contenus dans un plan parallèle au plan de défilement des brins de matériau. Ils forment un angle α de 180° au démarrage, lorsqu'ils sont en alignement parallèle (pas d'écartement) puis qui diminue progressivement en situation d'écartement. L'angle utilisé dans l'application est environ de 179° mais pourrait être inférieur à cette valeur.

Chacun de ces cylindres est bien entendu mobile en rotation autour de son axe et guide les brins respectivement dans deux directions de guidage différentes et divergentes.

Les cylindres d'écartement adjacents 32a, 33a sont en contact par l'une de leurs extrémités pour éviter une dégradation des brins de matériau au niveau de leur bord central, comme indiqué précédemment.

Comme illustré à la figure 6, la pièce d'appui peut comprendre plus de deux pièces support 32, 33, 35. Dans ce mode de réalisation, la pièce d'appui comprend trois pièces supports 32, 33, 35 de sorte à espacer trois brins de matériau 12a, 12b+12c, 12d les uns des autres. Les axes de rotation des cylindres de guidage en écartement ménagés respectivement sur chaque pièce support forment un angle non nul entre eux. Plus précisément, l'axe de rotation d'un premier cylindre d'écartement 35a situé sur une première pièce support 35 s'étend parallèlement à l'axe de rotation du cylindre amont 31 tandis que les axes de rotation des deux autres cylindres de guidage en écartement adjacents 32a, 33a forment un angle non nul avec l'axe de rotation du premier cylindre 35a. Les directions des axes des deux autres cylindres 32a, 33a forment également un angle non nul entre elles.

Le nombre de cylindres porté par chaque pièce support dans le mode de réalisation de la figure 6 est également différent de celui de la figure 5. Chaque pièce support 32, 33, 35 comprend en effet trois cylindres de guidage en écartement d'axe parallèle. On notera également que les brins de matériau peuvent passer sur les cylindres de l'écarteur ou sous au moins certains de ceux-ci, comme cela est visible sur la figure 6.

Dans les deux modes de réalisation représentés, les moyens de guidage amont 31 et aval 34 sont situés au même niveau (ou à la même hauteur) mais cela pourrait ne pas être le cas. Il pourrait par exemple également être possible que les moyens de guidage amont et aval soient chacun situés d'un côté distinct de l'écarteur.

Comme indiqué précédemment, les cylindres 32a, 33a ou 32a, 33a, 35a sont en contact au niveau d'une de leur extrémité. Cela permet d'éviter que les brins de matière soient abîmés. On souhaite également que les cylindres 32b, 33b représentés sur la figure 5a soient en contact au niveau de leur extrémité mais, le dispositif étant configuré pour être d'inclinaison variable, cela ne peut être réalisé facilement. On a donc disposé sur un tourillon maintenant le cylindre des moyens élastiques, notamment un ressort comprimé 36, 37 interposé entre le bras et le palier du cylindre et permettant de repousser le cylindre vers le cylindre opposé relié à l'autre bras.

### 2.1.3. Dispositif de complexage

Le dispositif de complexage permet d'assembler les films d'électrolyte aux brins de matériau espacés par le dispositif de séparation.

Le dispositif de complexage reçoit en entrée :
- les deux brins de matériau 12a, 12b écartés issus du dispositif de séparation,
- un premier film d'électrolyte 14 destiné à être placé sur les brins de matériau écartés 12a, 12b,
- un deuxième film d'électrolyte 15 destiné à être placé sous les brins de matériau écartés 12a, 12b.

Le dispositif de complexage permet de contre coller sous pression les films d'électrolyte et les brins de matériau de sorte à obtenir un complexe dont les couches adhèrent.

Comme illustré à la figure 4, le dispositif de complexage comprend des moyens de pressage pour la superposition et l'assemblage des films d'électrolyte sur chacune des faces des brins de matériau espacés.

Les moyens de pressage comprennent par exemple un support 41 et un cylindre de compression 42 entre lesquels défilent les films d'électrolyte 14, 15 et les brins de matériau espacés 12a, 12b. Le support peut être lui-même constitué d'un (ou plusieurs) cylindre(s) de support.

Dans ce cas et comme illustré aux figures 3 et 4, le complexage est effectué par deux cylindres 41, 42 mobiles en rotation autour de leurs axes et superposés entre lesquels circulent les films d'électrolyte 14, 15 et les brins de matériau écartés 12a, 12b, un film d'électrolyte passant sur chacun des cylindres.

Les cylindres 41, 42 forment également des moyens d'entraînement de la bande de matériau et des brins issus de celle-ci dans le système. L'un au moins des cylindres est relié de ce fait à un moteur. On peut également utiliser le double entraînement en motorisant les cylindres 41 et 42.

Avantageusement, l'un des cylindres du dispositif de complexage (par exemple le cylindre de compression) peut être couplé à des moyens d'équilibrage 43.

Comme illustré à la figure 7, ces moyens d'équilibrage permettent d'appliquer des forces F1, F2 différentes sur les deux extrémités 42a, 42b du cylindre 42.Ceci permet de créer un couple susceptible d'incliner légèrement l'axe de rotation du cylindre. Ainsi, l'espace entre les deux cylindres peut être plus étroit à une première extrémité du cylindre (où circule un premier brin de matériau) qu'à la deuxième extrémité (où circule un deuxième brin).

Comme l'enveloppe du cylindre est en caoutchouc, elle laisse tout de même passer le film mais se déforme, modifiant ainsi le rayon d'entraînement d'un brin par rapport à l'autre.

Cela signifie que le parcours des brins de matériau ainsi que leurs vitesses linéaires diffèrent. Il est ainsi possible de faire varier la tension d'un brin de matériau par rapport à un autre brin de matériau.

Avantageusement, les moyens d'équilibrage peuvent être commandés en fonction de données envoyées par un dispositif 44 de mesure de la tension des brins de matériau.

Ceci permet d'ajuster les forces de traction exercées sur les brins de matériau pour les égaliser afin d'éviter des défauts (plis, frisures) dans le complexe une fois celui formé par le dispositif de complexage.

### 2.2. Système pour la mise en oeuvre du procédé illustré à la figure 2

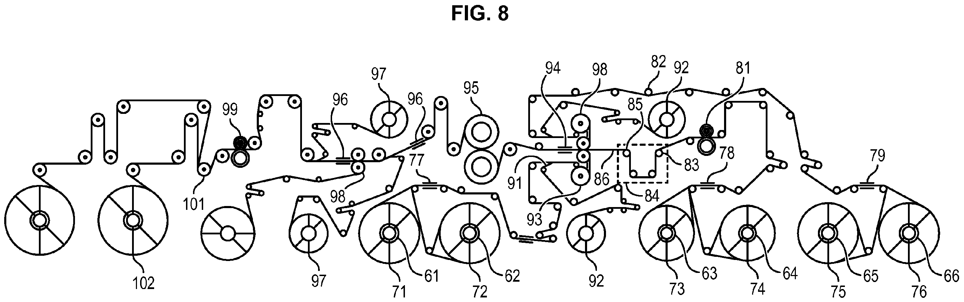

En référence à la figure 8, on a illustré un exemple de système de fabrication de ruban pour la mise en oeuvre du procédé illustré à la figure 2.

Le système comprend des dérouleurs 61 à 66 sur lesquels sont placés des bobines de cathode et d'électrolyte 71 à 76.

On remarquera sur la figure 8 que le système comprend deux dérouleurs 63, 64 sur lesquels sont placés deux bobines de bande de matériau collecteur/cathode 73, 74. Le système comprend deux fois deux dérouleurs 61, 62 et 65, 66 sur lesquels sont placés les films d'électrolyte et de protection 71, 72 et 75, 76.

Deux des dérouleurs 61, 62 concernant l'électrolyte permettent de déposer un film d'électrolyte 71, 72 sur une première face de la bande de matériau 73, 74, et deux autres 65, 66 permettent le dépôt d'un film d'électrolyte 75, 76 sur une deuxième face de la bande de matériau 73, 74.

Le système pourrait comprendre toutefois une seule bobine de chacun des films ou seulement une ou deux bobines pour déposer un film d'électrolyte sur une seule face de la bande de matériau. La bande de matériau 73, 74 pourrait également comprendre uniquement une couche de matériau de cathode, ou une seule couche de cathode et un collecteur, et le film d'électrolyte pourrait ne pas être recouvert d'un ou plusieurs films de protection.

Le système comprend également, pour les bobines portant des films/bandes de même nature, un dispositif de raboutage 77, 78, 79 de type classique permettant de raccrocher à une bande de fin de l'une des bobines le début de l'autre des bobines.

Ce dispositif de raboutage est optionnel mais permet de changer les bobines en un temps optimisé.

Le système comprend ensuite de nombreux dispositifs tenseurs pour tendre les différents films/bandes déroulés à partir des bobines. Ces dispositifs sont classiques et ne seront pas non plus décrits plus avant.

Le système peut également comprendre un dispositif optionnel de préchauffage (non représenté) de la bande de matériau disposé en sortie des bobines 73, 74 de bande de matériau. Un tel dispositif de préchauffage peut par exemple comporter des cylindres chauffants entre lesquels doivent passer les bandes de matériau.

Le système comprend également un dispositif de découpe 81 de la bande de matériau tel que décrit précédemment.

Le système peut également comprendre un dispositif aligneur (non représenté) en amont du dispositif de découpe 81 pour s'assurer que la découpe soit effectuée au milieu de la largeur de la bande de matériau. Ce dispositif aligneur peut être réglable à l'aide d'un élément de mesure et permet d'aligner la bande de matériau sur une position de référence. Il s'agit d'un dispositif de type connu que nous ne détaillerons pas plus avant ici.

Le système comprend également, en aval du dispositif de découpe, le dispositif de séparation 82 décrit précédemment.

Ce dispositif d'écartement comprend :
- un cylindre de guidage amont 83 sur lequel passent les deux brins de matériau découpés côte à côte,
- deux bras situés dans un plan horizontal portant chacun deux cylindres parallèles 84 ; des moyens de pivotement sont couplés à chacun des bras pour permettre de modifier la position des cylindres de chaque bras (écarteur),
- un deuxième cylindre de guidage aval 85 sur lequel passent les deux brins de film découpé, une fois ceux-ci écartés; la direction de guidage de ce cylindre est essentiellement parallèle à celle du premier cylindre de guidage 83 de sorte que les deux brins de films se retrouvent à nouveau entraînés en parallèle.

Le système comprend également un dispositif de mesure 86 en aval du dispositif de séparation 82. Ce dispositif de mesure 86 permet de mesurer les forces de traction exercées respectivement sur chacun des deux brins de matériau sortant du dispositif de séparation.

Tous les éléments décrits ci-dessus sont placés en série, en aval les uns des autres dans leur ordre de description et concernent la bande de matériau.

En ce qui concerne chaque film d'électrolyte, le système comprend un dispositif de retrait 91 d'un film de protection s'étendant sur la face du film d'électrolyte destinée à venir en contact avec les brins de matériau.

Suite au passage par le poste de retrait 91, le film de protection est dévié et ré enroulé sur une bobine de récupération 92. Il pourra par la suite être réutilisé pour être réappliqué sur un autre film d'électrolyte.

Le film d'électrolyte séparé du film de protection passe ensuite par des cylindres chauffants 93, pour que le film d'électrolyte adhère mieux aux brins de matériau.

Le système comprend également un dispositif de complexage 94 tel que décrit précédemment dans lequel rentrent les deux brins de matériau, un premier film d'électrolyte destiné à être placé sur les brins de matériau, et un deuxième film d'électrolyte destiné à être placé sous les brins de matériau.

On obtient un complexe en sortie du dispositif de complexage.

Le système peut comprendre en aval du dispositif de complexage des cylindres de refroidissement classique comprenant un ou plusieurs cylindres froids sur lequel on fait passer le complexe.

Il comprend également deux dispositifs de retrait 96 permettant de retirer les films de protection restants de chaque côté du complexe. Les films de protection sont alors déviés vers des enrouleurs 97 permettant de les ré-enrouler et de les récupérer pour les réutiliser par la suite.

Avantageusement, le système peut également comprendre un dispositif 98 de mise en place par complexage de la pellicule de séparation sur le complexe. Cette pellicule de séparation évite que le complexe ne colle sur lui-même lorsqu'on l'enroule sur une bobine. Ce dispositif 98 peut notamment comprendre deux simples cylindres entre lesquels défilent le complexe et la pellicule de séparation.

Le système comprend également un dispositif de découpe 99 tel que celui précédemment décrit et qui permet de découper longitudinalement le complexe double laize en son centre (là où la superposition ne comprend pas de brin de matériau, dans l'espace d'écartement entre les deux brins). Comme précédemment ce dispositif de découpe peut être associé à un dispositif d'alignement par rapport à une position de référence pour que le découpage se fasse dans une zone souhaitée par l'utilisateur.

Le dispositif d'assemblage comprend ensuite des cylindres de guidage 101 pour dévier les deux rubans de complexe simple laize obtenus suite au découpage.

L'un des deux rubans de complexe simple laize est entraîné dans une première voie vers une première bobine 102 sur laquelle il est ré enroulé alors que l'autre ruban de complexe est entraîné dans une deuxième voie, vers une deuxième bobine 103 sur laquelle il est ré enroulé.

Le dispositif de complexage peut également comporter des moyens de visualisation de l'état du film fini et des moyens de signalisation d'un défaut si les moyens de visualisation de l'état ont détecté un tel défaut.

De tels moyens de visualisation peuvent comporter une caméra alors que les moyens de signalisation comprennent un dispositif de pose d'étiquette, un tel dispositif pouvant notamment poser une étiquette au niveau du début de la zone comprenant le défaut et une étiquette au niveau de la fin de la zone. Un tel dispositif peut également ou alternativement comprendre l'inscription d'informations dans une puce RFID ou un l'émission d'un jet d'encre pour signaler le défaut.

Le système et le procédé décrits ci-dessus permettent donc de fabriquer un ruban de complexe de stockage d'énergie de largeur désirée à partir de films de largeur plus importante, de manière automatique en limitant le nombre d'intervention humaine nécessaire, ce qui diminue le coût de fabrication d'un tel ruban et en augmente la cadence de production.

### 3. Alternatives

Le lecteur aura compris que de nombreuses modifications peuvent être apportées au procédé et au système décrits ci-dessus sans sortir matériellement des nouveaux enseignements décrits ici.

Par conséquent, toutes les modifications de ce type sont destinées à être incorporées à l'intérieur de la portée des revendications jointes.

## Revendications

1. Procédé de fabrication d'un ruban de complexe pour la production d'ensembles de stockage d'énergie électrique à partir dudit ruban,
**caractérisé en ce que** le procédé comprend les étapes consistant à :
- faire défiler (100) une bande de matériau (11, 12, 13) en continu,
- découper longitudinalement (200) la bande de matériau de sorte à former au moins deux brins de matériau (11 a, 12a, 13a et 11 b, 12b, 13b) à partir de la bande de matériau,
- écarter transversalement (300) les brins de matériau selon une direction d'écartement s'étendant dans un plan de défilement des brins de matériau,
- former (400) au moins une couche fonctionnelle sur les brins de matériau écartés pour obtenir un complexe, et
- découper longitudinalement (500) le complexe pour obtenir au moins deux rubans de complexe de stockage d'énergie électrique.

2. Procédé selon la revendication précédente, dans lequel la bande de matériau est une cathode et la couche fonctionnelle comprend au moins une couche d'électrolyte.

3. Procédé selon l'une quelconque des revendications précédentes, lequel comprend en outre une étape consistant à faire défiler les brins de matériau écartés dans un même plan de défilement et selon des directions de défilement parallèles suite à l'étape d'écartement.

4. Procédé selon l'une quelconque des revendications précédentes, dans lequel l'étape consistant à former au moins une couche fonctionnelle consiste à :
- faire défiler (710) en continu au moins un film fonctionnel (14, 15), et
- superposer ledit ou au moins un film fonctionnel aux brins de matériau écartés,
la largeur dudit ou d'au moins un des films fonctionnels étant de préférence supérieure ou égale à la somme des largeurs des brins de matériau et de la distance d entre brins de matériau adjacents écartés.

5. Procédé selon la revendication précédente, dans lequel l'étape consistant à superposer au moins un film fonctionnel aux brins de matériau écartés comprend les sous étapes de :
- mise en contact des brins de matériau écartés avec ledit ou au moins l'un des films fonctionnels, et
- complexage (900) des brins de matériau avec ledit ou au moins l'un des films fonctionnels pour obtenir le complexe.

6. Procédé selon l'une des deux revendications précédentes, lequel comprend en outre une étape consistant à chauffer (750) ledit et au moins un film d'électrolyte et/ou les brins de matériau préalablement à l'étape consistant à superposer ledit ou au moins l'un des films fonctionnels aux brins de matériau écartés.

7. Procédé selon l'une des trois revendications précédentes, lequel comprend en outre une étape de préparation (700, 800) dudit ou au moins l'un des films fonctionnels préalablement à l'étape de superposition, ladite étape de préparation du film d'électrolyte comprenant les sous-étapes de :
- retrait (730, 830) d'un film de protection s'étendant sur une face dudit ou d'au moins un des films fonctionnels destinée à venir en contact avec les brins de matériau, et de
- redirection et récupération (740, 840) dudit film de protection.

8. Procédé selon la revendication précédente, dans lequel :
- la sous-étape de retrait du film de protection comprend le décollement du film de protection, et
- la sous-étape de récupération du film de protection comprend l'enroulage du film de protection sur un poste d'enroulage.

9. Procédé selon l'une des cinq revendications précédentes, dans lequel l'étape de superposition comprend :
- la superposition d'un premier film fonctionnel (14) aux faces supérieures des brins de matériau écartés (12a, 12b), et
- la superposition d'un deuxième film fonctionnel (15) sur les faces inférieures des brins de matériau écartés (12a, 12b),
les sous-étapes de superposition des premier et deuxième films fonctionnels étant de préférence mise en oeuvre simultanément.

10. Procédé selon l'une des sept revendications précédentes, lequel comprend en outre une étape consistant à déposer (1030, 1040) une pellicule de séparation sur une face du complexe postérieurement à l'étape de superposition du film fonctionnel sur les brins de matériau.

11. Procédé selon la revendication précédente, lequel comprend en outre une étape de conditionnement du complexe comprenant les sous étapes de :
- retrait (1050) d'un film de protection s'étendant sur une face du complexe, et de
- redirection et récupération (1060) dudit film de protection,
ladite étape de conditionnement étant mise en oeuvre préalablement à l'étape consistant à déposer la pellicule de séparation.

12. Procédé selon l'une des revendications précédentes, dans lequel l'étape consistant à découper longitudinalement le complexe consiste à découper le complexe dans une zone située entre les deux brins de matériau écartés.

13. Procédé selon l'une des revendications précédentes, lequel comprend en outre une étape de mesure des forces de traction exercées sur les brins de matériau écartés.

14. Procédé selon la revendication précédente, lequel comprend en outre une étape consistant à faire varier la vitesse d'entraînement induite par un élément d'entrainement sur chaque brin de matériau en fonction des forces de traction mesurées de sorte à maintenir égale entre elles lesdites forces de traction.

15. Système de fabrication d'un ruban de complexe de stockage d'énergie électrique pour la production d'ensembles de stockage d'énergie électrique à partir dudit ruban, **caractérisé en ce que** le système comprend :
- des moyens pour faire défiler une bande de matériau (11, 12, 13) en continu,
- des moyens de découpe (20; 81) pour découper longitudinalement la bande de matériau de sorte à former au moins deux brins de matériau (11 a, 12a, 13a et 11 b, 12b, 13b) à partir de la bande de matériau,
- des moyens de séparation (30 ; 82) pour écarter transversalement les brins de matériau selon une direction d'écartement s'étendant dans un plan de défilement des brins de matériau,
- des moyens de formation (40 ; 94) d'au moins une couche fonctionnelle sur les deux brins de matériau écartés, afin d'obtenir un complexe,
- des moyens de découpe (50 ; 99) pour découper longitudinalement le complexe pour obtenir au moins deux rubans de complexe de stockage d'énergie électrique.

## Patentansprüche

1. Verfahren zur Herstellung einer zusammenhängenden Reihe für die Herstellung elektrischer Energiespeicherkomplexe ausgehend von der besagten Reihe,
**dadurch gekennzeichnet, dass** das Verfahren die Schritte umfasst, die aus Folgendem bestehen:
- eine Materialbahn (11, 12, 13) kontinuierlich durchlaufen lassen (100),
- die Materialbahn längs zuschneiden (200), damit zumindest zwei Materialstränge (11a, 12a, 13a und 11b, 12b, 13b) aus der Materialbahn entstehen,
- die Materialstränge quer in einer Entfernungsrichtung auseinanderführen (300), die sich in einer Laufebene der Materialstränge erstreckt,
- zumindest eine Funktionsschicht auf den entfernten Materialsträngen bilden (400), um einen Komplex zu erhalten, und
- den Komplex längs zuschneiden (500), um zumindest zwei zusammenhängende Reihen elektrischer Energiespeicherkomplexe zu erzielen.

2. Verfahren nach dem vorstehenden Anspruch, bei dem die Materialbahn eine Kathode ist und die Funktionsschicht zumindest eine Elektrolytschicht umfasst.

3. Verfahren nach einem der vorstehenden Ansprüche, das ferner einen Schritt umfasst, der darin besteht, die entfernten Materialstränge nach dem Trennvorgang in einer gleichen Durchlaufebene und in parallelen Durchlaufrichtungen laufen zu lassen.

4. Verfahren nach einem der vorstehenden Ansprüche, bei dem der Schritt, der darin besteht, zumindest eine Funktionsschicht zu bilden, folgendes umfasst:
- zumindest eine Funktionsfolie (14, 15) kontinuierlich durchlaufen zu lassen (710), und
- die besagte oder zumindest eine Funktionsfolie über die entfernten Materialstränge zu legen,
wobei die Breite der besagten oder zumindest einer der Funktionsfolien vorzugsweise größer oder gleich der Summe der Breiten der Materialstränge und der Entfernung d zwischen den anschließenden entfernten Materialsträngen ist.

5. Verfahren nach dem vorstehenden Anspruch, bei dem der Schritt, der darin besteht, zumindest eine Funktionsfolie auf die entfernten Materialstränge zu legen, die folgenden Unterschritte umfasst:
- Berührung der entfernten Materialstränge mit der besagten oder zumindest einer der Funktionsfolien, und
- Kaschieren (900) der Materialstränge mit der besagten oder zumindest einer der Funktionsfolien zur Herstellung des Komplexes.

6. Verfahren nach einem der beiden vorstehenden Ansprüche, das ferner einen Schritt umfasst, der darin besteht, die besagte und zumindest eine Elektrolytfolie und/oder die Materialstränge zu erwärmen (750), vor dem Schritt der darin besteht, die oder zumindest eine der Funktionsfolien auf die entfernten Materialstränge zu legen.

7. Verfahren nach einem der drei vorstehenden Ansprüche, das ferner einen Schritt mit Vorbereitung (700, 800) der besagten oder zumindest einer der Funktionsfolien vor dem Schritt des Auflegens umfasst, wobei der besagte Schritt der Vorbereitung der Elektrolytfolie die folgenden Unterschritte umfasst:
- Abziehen (730, 830) einer Schutzfolie, die sich auf einer Seite der besagten oder zumindest einen Funktionsfolien erstreckt, die in Berührung mit den Materialsträngen kommen soll, und
- Umleitung und Rückgewinnung (740, 840) der besagten Schutzfolie.

8. Verfahren nach dem vorstehenden Anspruch, bei dem:
- der Unterschritt mit Abziehen der Schutzfolie das Ablösen der Schutzfolie umfasst, und
- der Unterschritt mit Rückgewinnung der Schutzfolie das Aufrollen der Schutzfolie auf einen Aufrollposten umfasst.

9. Verfahren nach einem der fünf vorstehenden Ansprüche, bei dem der Schritt mit dem Auflegen folgendes umfasst:
- das Auflegen einer ersten Funktionsfolie (14) auf die Oberseiten der entfernten Materialstränge (12a, 12b), und
- das Auflegen einer zweiten Funktionsfolie (15) auf die Unterseiten der entfernten Materialstränge (12a, 12b),
wobei die Unterschritte mit dem Auflegen der ersten und der zweiten Funktionsfolie vorzugsweise gleichzeitig durchgeführt werden.

10. Verfahren nach einem der sieben vorstehenden Ansprüche, das ferner einen Schritt umfasst, der darin besteht, nach dem Schritt mit dem Auflegen der Funktionsfolie auf die Materialstränge eine Trennschicht (1030, 1040) auf eine Seite des Komplexes zu legen.

11. Verfahren nach dem vorstehenden Anspruch, das ferner einen Schritt mit Verpackung des Komplexes mit den folgenden Unterschritten umfasst:
- Abziehen (1050) einer Schutzfolie, die sich auf einer Seite des Komplexes erstreckt, und
- Umleitung und Rückgewinnung (1060) der besagten Schutzfolie,
wobei der Schritt mit der Verpackung vor dem Schritt durchgeführt wird, der darin besteht, die Trennschicht abzulegen.

12. Verfahren nach einem der vorstehenden Ansprüche, bei dem der Schritt, der darin besteht, den Komplex längs zuzuschneiden, darin besteht, den Komplex in einem Bereich zuzuschneiden, der sich zwischen den beiden entfernten Materialsträngen befindet.

13. Verfahren nach einem der vorstehenden Ansprüche, das ferner einen Schritt mit Messung der Zugkräfte umfasst, die auf die Materialstränge ausgeübt werden.

14. Verfahren nach dem vorstehenden Anspruch, das ferner einen Schritt umfasst, der darin besteht, die Antriebsgeschwindigkeit zu variieren, die von einem Antriebselement je nach den gemessenen Zugkräften auf jeden Materialstrang eingeleitet wird, damit die besagten Zugkräfte untereinander gleich gehalten werden.

15. System zur Herstellung einer zusammenhängenden Reihe elektrischer Energiespeicherkomplexe für die Herstellung elektrischer Energiespeichergruppen ausgehend von der besagten Reihe, **dadurch gekennzeichnet, dass** das System folgendes umfasst:
- Mittel, die eine Materialbahn (11, 12, 13) kontinuierlich durchlaufen lassen,
- Schneidmittel (20; 81) zum Zuschneiden der Materialbahn in Längsrichtung, damit zumindest zwei Materialstränge (11a, 12a, 13a und 11b, 12b, 13b) aus der Materialbahn entstehen,
- Trennmittel (30; 82) zum Entfernen der Materialstränge in Querrichtung in einer Entfernungsrichtung, die sich in einer Laufebene der Materialstränge erstreckt,
- Mittel zur Bildung (40; 94) von zumindest einer Funktionsschicht auf den entfernten Materialsträngen, um einen Komplex zu erhalten,
- Schneidmittel (50; 99) zum Zuschneiden des Komplexes in Längsrichtung, damit zumindest zwei Reihen elektrischer Energiespeicherkomplexe entstehen.

## Claims

1. A method for producing a ribbon of complex for producing electrical energy storage units from said ribbon,
**characterized in that** the method comprises the steps consisting in:
- continuous moving (100) a strip of material (11, 12, 13),
- longitudinally cutting (200) the strip of material so as to form at least two strands of material (11 a, 12a, 13a and 11 b, 12b, 13b) from the strip of material,
- transversally separating (300) the strands of material along a direction of separation extending in a moving plane of the strands of material,
- forming (400) at least one functional layer on the separated strands of material to obtain a complex, and
- longitudinally cutting (500) the complex to obtain at least two ribbons of electrical energy storage complex.

2. The method according to the preceding claim, wherein the strip of material is a cathode and the functional layer comprises at least one layer of electrolyte.

3. The method according to any one of the preceding claims, which further comprises a step of moving the separated strands of material in one and the same moving plane and along parallel moving directions following the separating step.

4. The method according to any one of the preceding claims, wherein the step consisting in forming at least one functional layer consists in:
- continuously moving (710) at least one functional film (14, 15), and
- superimposing said or at least one functional film on the separated strands of material,
the width of said or at least one of the functional films being preferably greater than or equal to the sum of the widths of the strands of material and the distance d between separated adjacent strands of material.

5. The method according to the preceding claim, wherein the step consisting of superimposing at least one functional film on the separated strands of material comprises the sub-steps consisting of:
- bringing the separated strands of material into contact with said or at least one of the functional films, and
- complexing (900) the strands of material with said or at least one of the functional films to obtain the complex.

6. The method according to one of the two preceding claims, which further comprises a step consisting of heating (750) said and at least one electrolyte film and/or the strands of material prior to the step consisting in superimposing said or at least one of the functional films on the separated strands of material.

7. The method according to one of the three preceding claims, which further comprises a step (700, 800) of preparing said or at least one of the functional films prior to the superimposing step, said step of preparing the electrolyte film comprising the sub-steps of:
- removing (730, 830) a protective film extending on one face of said or at least one of the functional films intended to come into contact with the strands of material, and
- redirecting and recovering (740, 840) said protective film;

8. The method according to the preceding claim, wherein:
- the sub-step of removing the protective film comprises the debonding of the protective film, and
- the sub-step of recovering the protective film comprises the winding of the protective film on a winding station.

9. The method according to one of the five preceding claims, wherein the superimposition step comprises:
- the superimposition of a first functional film (14) on the upper faces of the separated strands of material (12a, 12b), and
- the superimposition of a second functional film (15) on the lower faces of the separated strands of material (12a, 12b),
the sub-steps of superimposing the first and second functional films being preferably implemented simultaneously.

10. The method according to one of the seven preceding claims, which further comprises a step (1030, 1040) consisting of depositing a separating film on one face of the complex after the step of superimposing the functional film on the strands of material.

11. The method according to the preceding claim, which further comprises a step of processing a complex comprising the sub-steps of:
- removing (1050) a protective film extending over one face of the complex, and
- redirecting and recovering (1060) said protective film,
said processing step being implemented prior to the step consisting in depositing the separating film.

12. The method according to one of the preceding claims, wherein the step consisting in longitudinally cutting the complex consists in cutting the complex in an area located between the two separated strands of material.

13. The method according to one of the preceding claims, which further comprises a step of measuring the traction forces exerted on the separated strands of material.

14. The method according to the preceding claim, which further comprises a step consisting in varying the drive speed induced by a drive element on each strands of material as a function of the traction forces measured, so as to keep said traction forces equal to one another.

15. A system for producing a ribbon of electrical energy storing complex for producing electrical energy storage units from said ribbon, **characterized in that** the system comprises:
- means for continuous moving a strip of material (11, 12, 13),
- cutting means (20; 81) for longitudinally cutting the strip of material so as to form at least two strands of material (11 a, 12a, 13a and 11 b, 12b, 13b) from the strip of material,
- separating means (30; 82) for transversally separating the strands of material along a direction of separation extending in a moving plane of the strands of material,
- means (40; 94) for forming at least one functional layer on the two separated strands of material in order to obtain a complex,
- cutting means (50; 99) to longitudinally cut the complex to obtain at least two ribbons of electrical energy storage complex.
